(19) Europäisches Patentamt
European Patent Office
Office européen des brevets

(11) **EP 2 743 077 A1**

(12) **EUROPEAN PATENT APPLICATION**

(43) Date of publication:
**18.06.2014 Bulletin 2014/25**

(51) Int Cl.:
***B32B 5/02*** (2006.01)

(21) Application number: **13290132.3**

(22) Date of filing: **11.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.12.2012 EP 12290434**

(71) Applicant: **Saint-Gobain Placo SAS
92150 Suresnes (FR)**

(72) Inventors:
• **Hotchin, Glen
Coventry, Warwickshire CV3 2TT (GB)**
• **Jones, Nicholas
Melton Mowbray
Leicestershire, LE14 4AL (GB)**

(74) Representative: **Pugsley, Victoria Antonietta
Chapman Molony
18 Staple Gardens
Winchester SO23 8SR (GB)**

(54) **Construction panel**

(57) A panel for use in building construction comprises a substrate board having two opposed faces, a polymer-based lamina being provided on one of these faces. The polymer-based lamina is characterised in that it is provided by a material for which the work done under uniaxial tensile stress to achieve a tensile strain of up to 0.12 is greater than 2.1 MJ/m$^3$.

Fig. 2

Printed by Jouve, 75001 PARIS (FR)

**Description**

The present invention relates to panels for use in building construction and the manufacture thereof. In particular the present invention relates to panels for providing partitions to which items such as sinks, televisions, or radiators may be affixed.

Light-weight panels such as plasterboard (e.g. gypsum plasterboard), polystyrene board and fibreboard are commonly used to provide partitions within buildings. Their advantages for this application include the fact that they are light and quick to install.

However, in certain cases, such light-weight panels may have the drawback that they are not strong enough to support fixtures (e.g. sinks, televisions, radiators, fire extinguishers, shelves and any other item that requires attachment to the panel). In such cases, the weight of the fixture may cause the fixing means (e.g. screws) to be pulled out of the panel, such that the fixture falls away from the partition.

Typically, this problem has been addressed by providing plywood sheets to increase the fixing strength of the panel. In this case, the plywood sheet is provided on the side of the panel opposite to that on which the fixture is to be located. The plywood sheet may provide increased strength for retaining one or more fixing means (e.g. screws) employed to secure the fixture to the panel. Typically, the plywood sheet is positioned within the building framework, and the plasterboard then fixed to the plywood, so that it lies outside the building framework.

As an alternative, metal support means may be provided. These may comprise fixing plates, channels, straps, or metal fasteners. As is the case for plywood sheets, the metal support means are generally positioned on the side of the panel opposite that to which the fixture is to be secured, and act to receive and secure fixing means, e.g. fixing screws, that are used to attach the fixture to the panel.

Both these arrangements have the disadvantage that they require the additional supporting components to be affixed to the panel on-site. Moreover, when metal support means are used, a plurality of such support means may be needed to support the full set of fixing means required to secure the fixture to the panel. Thus, installation process may be time-consuming and expensive.

Furthermore, the addition of metal support means or plywood sheets increases the weight and thickness of the partition, and/or results in a reduction in cavity wall space. In general, the plywood itself must be cut to size on site, thus increasing the time required for installation and possibly leading to the release of dust and potentially harmful components.

Therefore, there is a need to provide improved panels that are able to retain fixing means and support fixtures, and that do not require time-consuming installation processes.

Further to the above-defined problem, the present inventors have found that any reinforcements for the panels must be carefully selected so as to allow screw fixings to be inserted in a reliable and reproducible manner. In particular, it has been found that reinforcements should be selected so as to reduce the likelihood of overtightening of screw fixings. The term "overtightening" relates to the process by which the inner surface of a screw hole can easily be stripped by the screw if the screw is turned too far, with the result that the screw is then no longer retained securely in the panel.

It has been found that this problem may be reduced by selecting a reinforcement for the panel, wherein the work required to deform the material of the reinforcement is sufficiently high as to limit the sensitivity to overtightening.

Therefore, at its most general, the present invention may provide a panel that is reinforced with a backing lamina, the deformation characteristics of the material of the backing lamina being such as to reduce the occurrence of stripping of screw hole threads formed in the lamina.

In a first aspect, the present invention may provide a panel for use in building construction, the panel comprising a substrate board having two opposed faces, a polymer-based lamina being provided on one of the faces of the substrate board,

the polymer-based lamina being characterised in that is provided by a material for which the work done under uniaxial tensile stress to achieve a tensile strain of up to 0.12 is greater than 2.1 MJ/m$^3$.

Typically, the work done under uniaxial tensile stress is calculated by measuring the area under a curve of stress plotted against strain for a particular material.

In the case that a material fails at a tensile strain less than 0.12, then the polymer-based lamina is characterised by the work done up to failure of the specimen.

In the case that a material fails at a tensile stress greater than 0.12, then the polymer-based lamina is characterised by the work required to achieve a strain of 0.12.

Preferably, the polymer-based lamina is provided by a material for which the work done under uniaxial tensile stress to achieve a tensile strain of up to 0.12 is greater than 2.9 MJ/m$^3$, more preferably greater than 3.8 MJ/m$^3$.

The lamina represents a layer that provides a discrete component of the panel, that is, it is not integrally formed with the substrate. Effectively, there is a well-defined interface or boundary between the substrate and the lamina.

Preferably, the polymer-based lamina comprises principally a thermoplastic polymer. Alternatively, the polymer-based lamina may principally comprise a thermosetting polymer.

The polymer-based lamina may be provided by a monolithic polymer, that is, a unitary, non-composite material. Alternatively, the polymer-based lamina may be provided by a composite material having a polymeric matrix, for example, a fibre-reinforced polymer. In this case, the polymer-based lamina may be reinforced by polymeric fibres. Alternatively, the polymer-based lamina may be reinforced by inorganic fibres, e.g. glass fibres. In certain cases, the fibres and matrix of the fibre-reinforced polymer are provided by the same polymer. An example of such a composite is a self-reinforced polypropylene composite in which both the fibres and the matrix consist of polypropylene, this composite being available under the trade name Curv™.

Typically, the substrate board comprises plasterboard, that is, a board comprising gypsum plaster extruded between two paper or glass fibre sheets. Alternatively, the substrate board may comprise a polystyrene, phenolic foam, polyurethane foam, or cement board, glasswool batts or fibreboard.

Typically, the polymer-based lamina is glued to the substrate board. However, in other embodiments, the polymer-based lamina may be formed from a resin that is deposited on the board and allowed to cure.

Typically, the lamina has a thickness of at least 0.25 mm, preferably at least 0.5 mm, more preferably at least 1 mm. Such thickness may provide the necessary stiffness to the lamina, such that it can improve the fixing strength of the panel.

Typically, the thickness of the lamina is less than 4 mm, preferably less than 3 mm, more preferably less than 2.5 mm. In certain cases, e.g. in the case that the polymer-based lamina is a composite mat (for example, a self-reinforced composite), the thickness may be less than 2 mm. It is desirable to limit the thickness of the lamina, so that when the panel is installed to provide e.g. a wall, its footprint within the building structure is not too great. For reference, plywood reinforcements typically have a thickness of around 12 mm.

Typically, the thickness of the lamina is less than the thickness of the substrate board. Preferably, the thickness of the polymer-based lamina is less than 25% of the thickness of the substrate board, more preferably less than 20%.

A typical panel may comprise a gypsum plasterboard of 10-20 mm thickness, and may have a total thickness of approximately 11-25 mm.

Typically, the lamina is solid and non-porous. This may assist in providing the lamina with the necessary stiffness to improve the fixing strength of the panel. The phrase "solid and non-porous" is intended to exclude laminae that comprise a 3-dimensional porous array. The phrase is not intended to exclude laminae that have apertures, cut-outs, or perforations extending through the thickness of the lamina. For example, it is envisaged that the lamina may include a 2-dimensional distribution of through-thickness apertures.

In general, the polymer-based lamina is selected from the group comprising: polyvinylchloride, polycarbonate, nylon, acetal, self-reinforced polypropylene, and Bakelite™.

In general, the tensile strength at yield of the polymer-based lamina is at least 50 MPa and the modulus of elasticity in tension of the lamina is at least 2500 MPa.

In a second aspect, the present invention may provide a panel for use in building construction, the panel comprising a substrate board having two opposed faces, a fibreglass sheet being provided on one of the faces of the substrate board,

wherein the fibreglass sheet comprises a non-woven mat that is impregnated with resin.

Typically, the glass fibre content of the fibreglass sheet is greater than 25 wt%, preferably greater than 30 wt%, more preferably greater than 40 wt%.

Typically, the Young's Modulus of the resin is less than 5000 MPa, preferably less than 4500 MPa, more preferably less than 4000 MPa.

In general, the Young's Modulus of the resin is greater than 2000 MPa, preferably greater than 2500 MPa, more preferably greater than 3000 MPa.

The panel according to the second aspect of the invention may include one or more features of the panel according to the first aspect of the invention.

In a third aspect, the present invention may provide a panel for use in building construction, the panel comprising a substrate board having two opposed faces, a polymer-based lamina being provided on one of the faces of the substrate board,

wherein the polymer-based lamina is characterised in that its principal constituent by weight is a thermoplastic material having a Vickers indentation hardness greater than 0.06 GPa.

Preferably, the Vickers hardness is greater than 0.09 GPa, more preferably greater than 0.11 GPa.

In a fourth aspect, the present invention may provide a panel for use in building construction, the panel comprising a substrate board having two opposed faces, a polymer-based lamina being provided on one of the faces of the substrate board,

wherein the polymer-based lamina is configured such that when a No. 10 woodscrew is screwed into the lamina, the work done in tightening the screw, after maximum torque has been achieved is at least 7.7J.

In general, the torque required to tighten the screw within the polymer-based lamina has a peak value of at least 1.68Nm.

The work required to tighten the woodscrew is given by the area below a graph of tightening torque versus rotation angle, measured between the rotation angles of zero (corresponding to peak torque) and 7.85 radians. The value of 7.85 radians is selected because it corresponds to 1.25 turns of the screw. It has been found that when installing fixtures, the installers typically turn each screw for about one complete extra turn after peak torque has been reached. Thus, it is important that the lamina should be configured to continue to provide resistance to screw turning (i.e. to avoid stripping of the screw thread) over this angular range.

A No. 10 woodscrew has a length of 50 mm and a diameter of 5 mm.

In a fifth aspect, the present invention may provide a panel for use in building construction, the panel comprising a substrate board having two opposed faces, a polymer-based lamina being provided on one of the faces of the substrate board,

wherein the tensile strength at yield of the polymer-based lamina is at least 50 MPa, and the modulus of elasticity in tension of the lamina is at least 2500 MPa.

In a sixth aspect, the present invention may provide a panel for use in building construction, the panel comprising a substrate board having two opposed faces, a polymer-based lamina being provided on one of the faces of the substrate board,

wherein the polymer-based lamina is provided by a material having a fracture toughness greater than 1 MPa.m$^{1/2}$.

Preferably, the polymer-based lamina is provided by a material having a fracture toughness greater than 1.5 MPa.m$^{1/2}$, more preferably greater than 2 MPa.m$^{1/2}$.

Certain aspects and features of the present invention will now be described by way of example, with reference to the following Figures:

Figure 1 is a schematic graph of torque against rotation angle.

Figure 2 is graph of torque against rotation angle for Example 6, Example 8 and Comparative Example 2.

Figure 3 is a graph of peak torque during tightening against work done between 0 and 12% deformation during a tensile test, for Examples 1-3, 8, 9, and 16, as well as Comparative Examples 2 and 8.

Figure 4 is a graph of peak torque during tightening against Vickers indentation hardness for Examples, 1-3, 8, and Comparative Example 8.

Examples

Gyproc Duraline™ gypsum boards were each provided with a lamina that was glued to a surface of the board using Aquagrip 29860 glue.

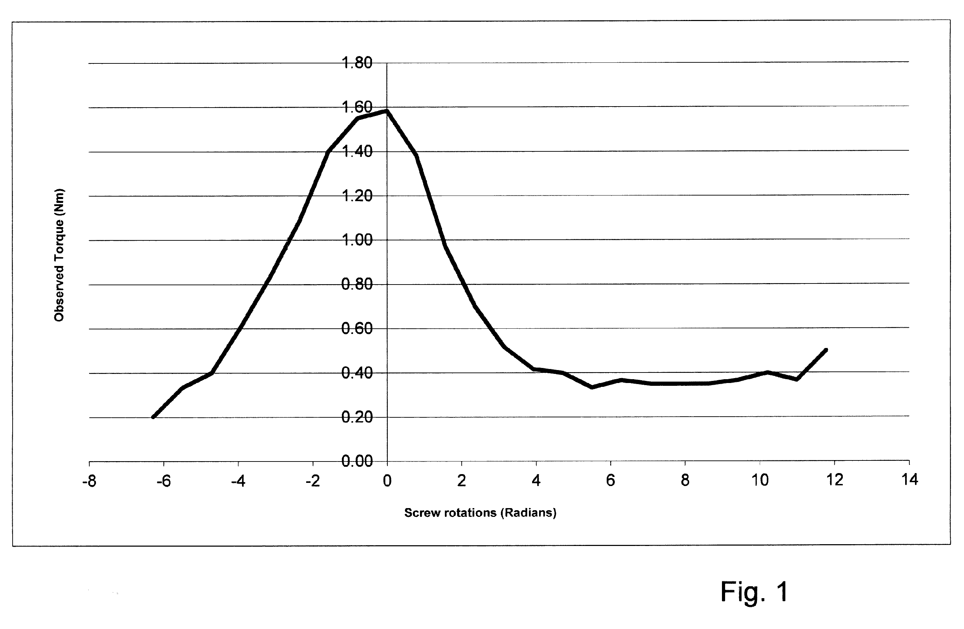

To quantify the resistance to overtightening, a graph of torque against rotation angle was plotted for a screw being inserted into a board. The screw was a No. 10 woodscrew having a length of 50 mm and a diameter of 5 mm. An example of such a graph is shown in Figure 1. The area below the curve was calculated between the rotation angles of zero (corresponding to the peak torque) and 7.85 radians.

The area gives an indication of the work done in tightening the screw after peak torque has been attained. It is thought that the greater the work done after peak torque has been attained, the lower the risk of overtightening the screw and stripping material from the inner surface of the screw hole.

The peak torque was also measured for each board. The results are set out in Table 1.

**Vickers hardness**

Vickers hardness was measured for selected samples. A 50 mm x 50 mm sample was cut from the lamina, and a Vickers diamond indenter pressed against the surface of the sample with a load (F) of 20 N for 34s. The speed of the diamond indenter was 50 micron / second.

After removal of the indenter, the pyramidal print created on the surface of the sample was observed under a microscope and its two lateral dimensions $d_1$, $d_2$ were recorded in millimetres (that is, the distances between opposite corners).

The Vickers hardness was calculated using the following equation:

$$\text{Hardness} = 0.001855F/d_1d_2$$

**Work done under uniaxial tensile stress**

A sample of 40 mm x 200 mm was cut from the lamina using a rotary saw. The sample was then inserted into an Instron 4405 mechanical testing machine, the jaws of the machine being positioned on the sample at a separation of 150 mm. The samples were tested under uniaxial tension at a rate of 4.2 mm / min until 50% strain had been attained or the specimen had failed.

A curve of force against displacement was obtained and the area under the curve was calculated for deformation between 0 and 18 mm (corresponding to a strain of 0.12). In the case that the sample failed before a strain of 0.12 was attained, the area under the curve was calculated up to the strain at failure. The result obtained was normalised using the specimen dimensions of 150 mm (that is, the distance between the jaws) x 40 mm x thickness of the lamina, to give a value for work done per unit volume.

Table 1

| Example | Lamina | Peak Torque (Nm) | Work done (J) | Work done during tensile testing (MJ/m$^3$) | Hardness (GPa) |
|---|---|---|---|---|---|
| Example 1 | 2mm thick PVC sheet | 3.7 | 12.1 | 4.3 | 0.14 |
| Example 2 | 2mm thick polycarbonate sheet | 4.3 | 12.4 | 5.7 | 0.15 |
| Example 3 | 2mm thick nylon sheet | 3.1 | 14.5 | 5.7 | 0.11 |
| Example 4 | 2mm thick Tufnol™ sheet | 2.7 | 14.0 | | |
| Example 5 | 2mm thick self-reinforced polypropylene sheet (Curv) | 2.3 | 14.8 | | |
| Example 6 | 1.34 mm thick self-reinforced polypropylene sheet (Curv) | 2.5 | 15.2 | | |
| Example 7 | 2 mm thick acetal sheet | 2.3 | 12.2 | | |
| Example 8 | 2mm thick monolithic polypropylene sheet | 2.2 | 9.5 | 3.1 | 0.09 |
| Example 9 | 1.6 mm thick fibreglass sheet (Crane ETG160), having a glass fibre content of 44 wt%. | 3.6 | 8 | 5.1 | |
| Example 10 | Fibreglass sheet containing non-woven glass fibre mat. Young's Modulus = 3600 MPa. i Glass mat grammage = 450 g/m$^2$. Thickness = 1.1 mm. | 1.9 | 12.2 | | |
| Example 11 | Fibreglass sheet containing non-woven glass fibre mat. Young's Modulus = 3600 MPa. Glass mat grammage = 900 g/m$^2$. Thickness = 1.3 mm | 1.7 | 9.9 | | |
| Example 12 | Fibreglass sheet containing non-woven glass fibre mat. Young's Modulus = 8400 MPa. Glass mat grammage = 900 g/m$^2$. Thickness = 1.6 mm | 1.8 | 11.5 | | |

(continued)

| Example | Lamina | Peak Torque (Nm) | Work done (J) | Work done during tensile testing (MJ/m$^3$) | Hardness (GPa) |
|---|---|---|---|---|---|
| Example 13 | Fibreglass sheet containing non-woven glass fibre mat. Young's Modulus = 3600 MPa. Glass mat grammage = 450 g/m$^2$. Thickness = 1.3 mm | 2.0 | 13.1 | | |
| Example 14 | Fibreglass sheet containing non-woven glass fibre mat. Young's Modulus = 3600 MPa. Glass mat grammage = 900 g/m$^2$. Thickness = 1.2 mm | 2.1 | 11.9 | | |
| Example 15 | Fibreglass sheet containing non-woven glass fibre mat. Young's Modulus = 8400 MPa. Glass mat grammage = 900 g/m$^2$. Thickness = 1.5 mm. | 1.8 | 10.2 | | |
| Example 16 | FR4 grade glass-reinforced epoxy. Thickness = 1.55 mm | 2.7 | 6.6 | 5.6 | |
| Comparative Example 1 | 12mm thick spruce plywood sheet | 2.0 | 10.4 | | |
| Comparative Example 2 | 1.6 mm thick fibreglass sheet (Crane FCG 180). The glass fibre content is 22 wt%. | 1.9 | 5.0 | 1.3 | |
| Comparative Example 3 | 2 mm fibreglass sheet from Lamilux. | 2.1 | 6.2 | | |
| Comparative Example 4 | 2 mm fibreglass sheet from Crane | 1.7 | 7.2 | | |
| Comparative Example 5 | 2 mm fibreglass sheet from Renolit. | 1.7 | 6.7 | | |
| Comparative Example 6 | Fibreglass sheet containing non-woven glass fibre mat. Young's Modulus = 8400 MPa. Glass mat grammage = 450 g/m$^2$. Thickness = 1.8 mm | 1.5 | 9.8 | | |
| Comparative Example 7 | Fibreglass sheet containing non-woven glass fibre mat. Young's Modulus = 8400 MPa. Glass mat grammage = 450 g/m$^2$. Thickness = 1.3 mm | 1.6 | 9.7 | | |
| Comparative Example 8 | 2 mm thick HDPE sheet | 1.7 | 9.3 | 1.9 | 0.05 |

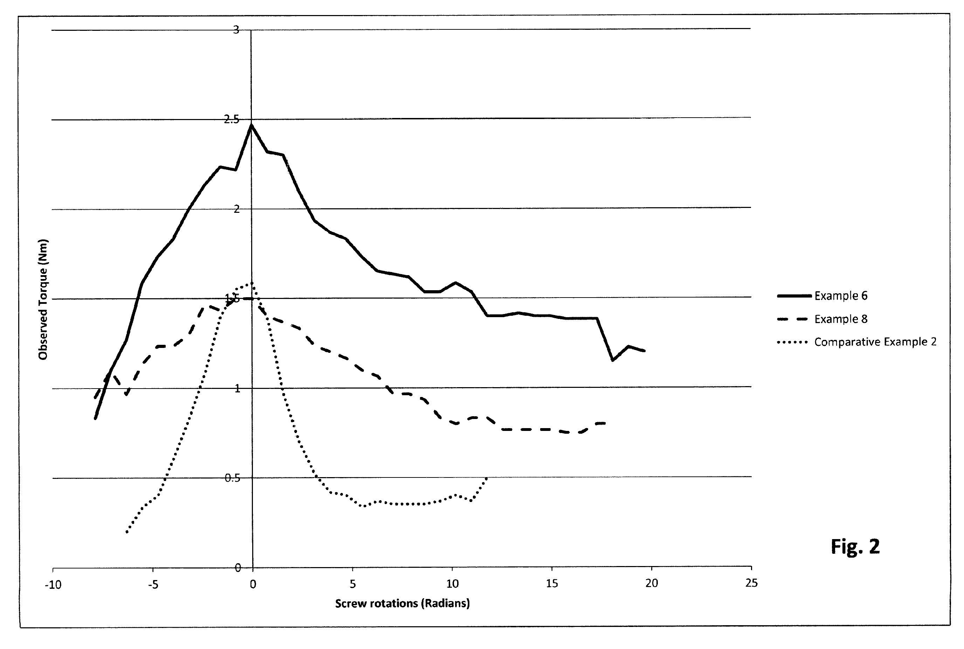

Figure 2 shows a graph of torque against rotation angle for a screw being inserted into a board according to Example 6, Example 8, and Comparative Example 2 respectively.

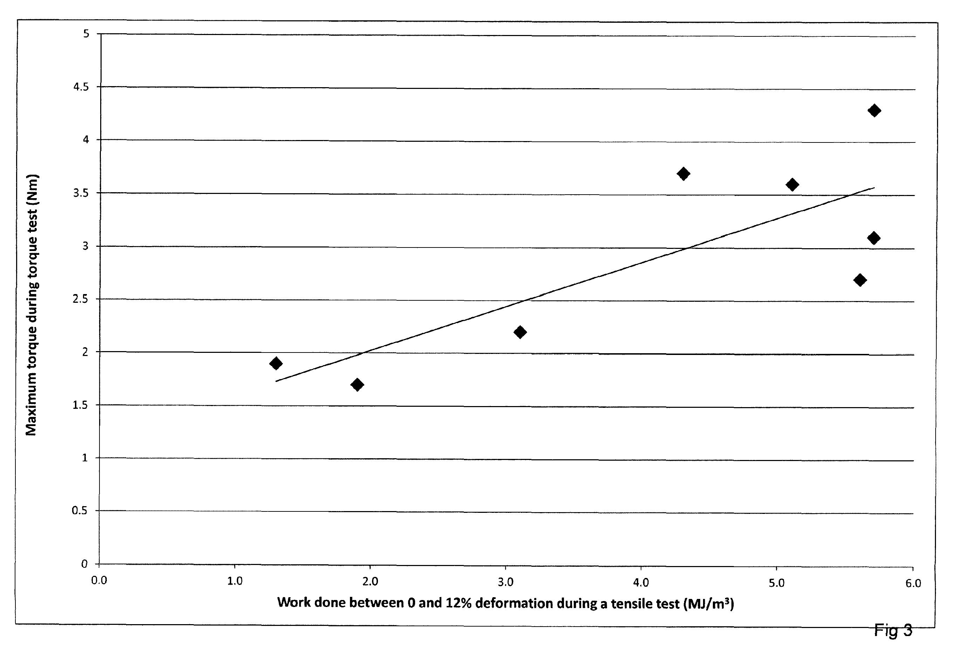

Figure 3 confirms that work done during tensile testing displays a good correlation with peak torque, a characteristic parameter of the screw-tightening process.

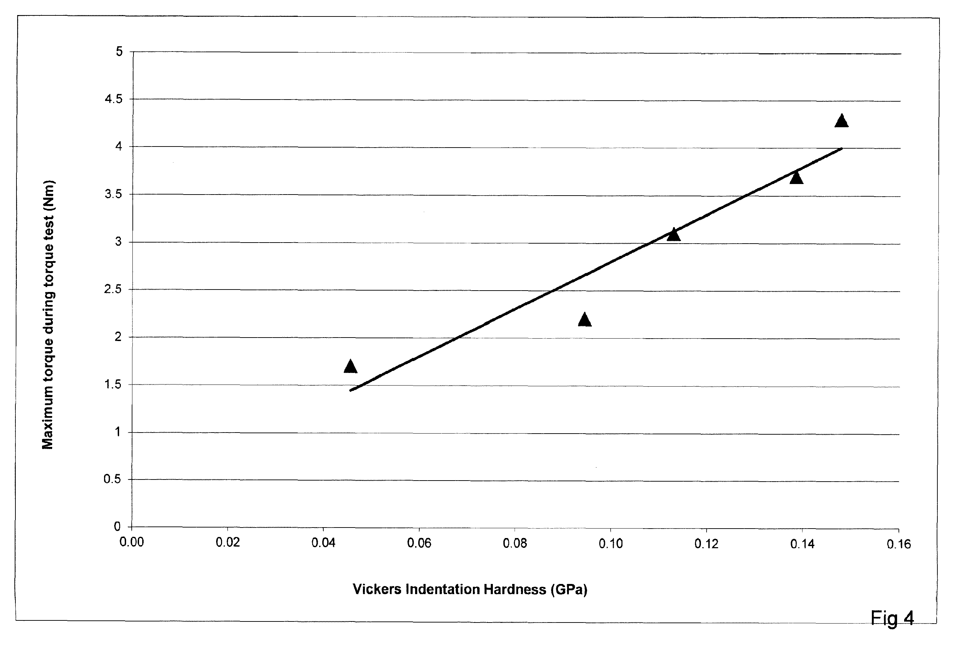

Figure 4 confirms that, at least for thermoplastic laminae, hardness displays a good correlation with peak torque, a characteristic parameter of the screw-tightening process.

**Claims**

1. A panel for use in building construction, the panel comprising a substrate board having two opposed faces, a polymer-based lamina being provided on one of the faces of the substrate board,

the polymer-based lamina being **characterised in that** it is provided by a material for which the work done under uniaxial tensile stress to achieve a tensile strain of up to 0.12 is greater than 2.1 MJ/m$^3$.

2. A panel according to claim 1, wherein the polymer-based lamina is **characterised in that** it is provided by a material for which the work done under uniaxial tensile stress to achieve a tensile strain of up to 0.12 is greater than 2.9 MJ/m$^3$, preferably greater than 3.8 MJ/m$^3$.

3. A panel according to claim 1, wherein the polymer-based lamina is either a monolithic polymer or a composite having a polymer matrix.

4. A panel according to claim 2, wherein the polymer-based lamina is provided by a fibre-reinforced polymer.

5. A panel according to any one of the preceding claims, wherein the polymer-based lamina comprises principally a thermoplastic polymer.

6. A panel according to any one of claims 1-3, wherein the polymer-based lamina comprises principally a thermosetting polymer.

7. A panel according to claim 6, wherein the fibres and the matrix of the fibre-reinforced polymer are provided by the same polymer.

8. A panel according to any one of the preceding claims, wherein the polymer-based lamina is solid and non-porous.

9. A panel according to any one of the preceding claims, wherein the thickness of the polymer-based lamina is less than 20% of the thickness of the substrate board.

10. A panel according to any one of the preceding claims, wherein the thickness of the polymer-based lamina is less than 5mm.

11. A panel according to claim 1, wherein the polymer-based lamina is selected from the group comprising: polyvinylchloride, polycarbonate, nylon, acetal, self-reinforced polypropylene, fibreglass and Bakelite.

12. A panel for use in building construction, the panel comprising a substrate board having two opposed faces, a fibreglass sheet being provided on one of the faces of the substrate board,

wherein the fibreglass sheet comprises a non-woven mat that is impregnated with resin.

13. A panel according to claim 15, wherein the glass fibre content of the fibreglass sheet is greater than 25 wt%.

14. A panel according to claim 15 or claim 16, wherein the Young's Modulus of the resin is less than 5000 MPa.

15. A panel for use in building construction, the panel comprising a substrate board having two opposed faces, a polymer-based lamina being provided on one of the faces of the substrate board,

wherein the polymer-based lamina is **characterised in that** its principal constituent by weight is a thermoplastic material having a Vickers indentation hardness greater than 0.06 GPa.

Fig. 1

EP 2 743 077 A1

Fig. 2

Fig 3

Fig 4

# EP 2 743 077 A1

Europäisches
Patentamt
European
Patent Office
Office européen
des brevets

## EUROPEAN SEARCH REPORT

Application Number

EP 13 29 0132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/072393 A2 (SAINT GOBAIN ISOVER [FR]; SORIANO HOYUELOS ESTHER [ES]; NAVARRO NIEDER) 26 August 2004 (2004-08-26) * abstract * * claim 2 * * page 1, line 12 - line 16 * * page 3, lines 4-8,18-23 * * page 4, line 26 - line 32 * * page 5, line 25 - line 29 * * page 7, line 1 - line 2 * ----- | 1-15 | INV. B32B5/02 B32B13/12 B32B13/14 B32B5/00 B32B5/10 B32B5/24 B32B5/28 B32B7/00 B32B7/02 B32B9/00 B32B13/02 |
| X | US 2004/084127 A1 (PORTER JOHN FREDERICK [CA]) 6 May 2004 (2004-05-06) * abstract * * figure 1 * * paragraph [0020] - paragraph [0028] * * claims 1-4 * * paragraphs [0003], [0004] * ----- | 1-15 | B32B19/00 B32B19/02 B32B27/00 B32B27/02 B32B27/04 B32B27/08 |
| X | EP 2 025 825 A2 (FIBERWEB INC [US]) 18 February 2009 (2009-02-18) * claim 18 * * claims 1-17 * * abstract * * paragraph [0001] - paragraph [0060] * ----- | 1-15 | TECHNICAL FIELDS SEARCHED (IPC) B32B E04B E04C |
| X | US 2004/026027 A1 (WALTERS JEFFREY L [US]) 12 February 2004 (2004-02-12) * abstract * * claims 1-20 * * paragraph [0002] - paragraph [0036] * ----- -/-- | 1-15 | |

The present search report has been drawn up for all claims

| Place of search | Date of completion of the search | Examiner |
|---|---|---|
| The Hague | 21 January 2014 | Hammond, Andrew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

Europäisches
Patentamt

European
Patent Office

Office européen
des brevets

# EUROPEAN SEARCH REPORT

**Application Number**

EP 13 29 0132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S59 179317 A (MATSUSHITA ELECTRIC WORKS LTD) 11 October 1984 (1984-10-11)<br><br>* EPODOC abstract *<br>* WPI abstract *<br>* Figure * | 1-3, 5-11, 13-15 | B32B27/12<br>B32B27/30<br>B32B27/32<br>B32B27/34<br>B32B27/36<br>B32B27/42 |
| X | EP 1 022 400 A1 (IBIDEN CO LTD [JP]) 26 July 2000 (2000-07-26)<br>* abstract *<br>* EPODOC abstract * | 1-11,15 | ADD.<br>E04C2/00 |
| X | FR 2 671 817 A1 (SAINT GOBAIN ISOVER [FR]) 24 July 1992 (1992-07-24)<br>* claims 1,7 *<br>* page 7, line 11 - line 15 *<br>* page 1, line 5 - line 9 *<br>* abstract * | 1-15 | |
| X | US 2007/298229 A1 (RASMUSSON DENNIS G [SE] ET AL) 27 December 2007 (2007-12-27)<br>* abstract *<br>* claims 1-24 *<br>* paragraph [0001] - paragraph [0055] * | 1-15 | TECHNICAL FIELDS SEARCHED (IPC) |
| X | US 2005/042432 A1 (JONES JOHN M [US] ET AL) 24 February 2005 (2005-02-24)<br>* paragraphs [0001], [0044], [0066] - [0070], [0083]; claims 1-5,23; figure 7a * | 1-15 | |

The present search report has been drawn up for all claims

| Place of search | Date of completion of the search | Examiner |
|---|---|---|
| The Hague | 21 January 2014 | Hammond, Andrew |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 13 29 0132

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2014

| Patent document cited in search report | | Publication date | Patent family member(s) | | Publication date |
|---|---|---|---|---|---|
| WO 2004072393 | A2 | 26-08-2004 | AT | 393273 T | 15-05-2008 |
| | | | AU | 2004210931 A1 | 26-08-2004 |
| | | | BR | PI0407197 A | 14-02-2006 |
| | | | CA | 2515005 A1 | 26-08-2004 |
| | | | CN | 1764764 A | 26-04-2006 |
| | | | DE | 602004013278 T2 | 07-05-2009 |
| | | | DK | 1592853 T3 | 25-08-2008 |
| | | | EP | 1592853 A2 | 09-11-2005 |
| | | | ES | 1054578 U | 16-08-2003 |
| | | | ES | 2305720 T3 | 01-11-2008 |
| | | | JP | 5030145 B2 | 19-09-2012 |
| | | | JP | 2006517006 A | 13-07-2006 |
| | | | KR | 20050097972 A | 10-10-2005 |
| | | | PT | 1592853 E | 30-07-2008 |
| | | | RU | 2340743 C2 | 10-12-2008 |
| | | | SI | 1592853 T1 | 31-10-2008 |
| | | | US | 2007154695 A1 | 05-07-2007 |
| | | | WO | 2004072393 A2 | 26-08-2004 |
| US 2004084127 | A1 | 06-05-2004 | AU | 2929101 A | 16-07-2001 |
| | | | CA | 2396362 A1 | 12-07-2001 |
| | | | CN | 1416390 A | 07-05-2003 |
| | | | EP | 1250222 A1 | 23-10-2002 |
| | | | MX | PA02006662 A | 10-09-2004 |
| | | | US | 2002182953 A1 | 05-12-2002 |
| | | | US | 2002182954 A1 | 05-12-2002 |
| | | | US | 2004084127 A1 | 06-05-2004 |
| | | | US | 2011053445 A1 | 03-03-2011 |
| | | | WO | 0149484 A1 | 12-07-2001 |
| EP 2025825 | A2 | 18-02-2009 | EP | 2025825 A2 | 18-02-2009 |
| | | | US | 2009042471 A1 | 12-02-2009 |
| | | | US | 2011269363 A1 | 03-11-2011 |
| US 2004026027 | A1 | 12-02-2004 | NONE | | |
| JP S59179317 | A | 11-10-1984 | NONE | | |
| EP 1022400 | A1 | 26-07-2000 | EP | 1022400 A1 | 26-07-2000 |
| | | | WO | 9916984 A1 | 08-04-1999 |
| FR 2671817 | A1 | 24-07-1992 | NONE | | |
| US 2007298229 | A1 | 27-12-2007 | AT | 455645 T | 15-02-2010 |
| | | | EP | 1814732 A1 | 08-08-2007 |
| | | | ES | 2339796 T3 | 25-05-2010 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 13 29 0132

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2014

| Patent document cited in search report | Publication date | Patent family member(s) | Publication date |
|---|---|---|---|
| | | NL 1027576 C2 | 29-05-2006 |
| | | US 2007298229 A1 | 27-12-2007 |
| | | WO 2006057557 A1 | 01-06-2006 |
| US 2005042432 A1 | 24-02-2005 | NONE | |

EPO FORM P0459

For more details about this annex : see Official Journal of the European Patent Office, No. 12/82